**Europäisches Patentamt**

**European Patent Office**

**Office européen des brevets**

(19)

(11) Veröffentlichungsnummer: **0 112 348**
**B1**

(12) # EUROPÄISCHE PATENTSCHRIFT

(45) Veröffentlichungstag der Patentschrift:
27.08.86

(21) Anmeldenummer: **83901907.2**

(22) Anmeldetag: **24.06.83**

(86) Internationale Anmeldenummer:
**PCT/DE 83/00114**

(87) Internationale Veröffentlichungsnummer:
**WO 84/00142 (19.01.84 Gazette 84/2)**

(51) Int. Cl.⁴: **B 65 G 1/04**

(54) **WABENREGALANLAGE, INSBESONDERE BESCHICKUNGS- UND ENTNAHMEVORRICHTUNG FÜR EINE SOLCHE ANLAGE.**

(30) Priorität: 24.06.82 DE 3223594
12.10.82 DE 3237709

(43) Veröffentlichungstag der Anmeldung:
04.07.84 Patentblatt 84/27

(45) Bekanntmachung des Hinweises auf die Patenterteilung:
27.08.86 Patentblatt 86/35

(84) Benannte Vertragsstaaten:
**BE DE FR**

(56) Entgegenhaltungen:
**DE - A - 2 102 098**
**FR - A - 1 214 242**
**US - A - 4 063 653**

(73) Patentinhaber: **THEOBALD, Wolfgang, Merschstrasse 5,**
**D-5758 Fröndenberg-Warmen (DE)**

(72) Erfinder: **THEOBALD, Wolfgang, Merschstrasse 5,**
**D-5758 Fröndenberg-Warmen (DE)**

(74) Vertreter: **Henfling, Fritz, Dipl.-Ing., Beurhausstrasse 7,**
**D-4600 Dortmund 1 (DE)**

## Beschreibung

Die Erfindung betrifft eine Wabenregalanlage, bestehend aus mindestens einem aus einer Vielzahl von über- und nebeneinander angeordneten, auf den Querschnitt der in sie einzulagernden Paletten ausgelegten Fächern gebildeten Regal, in das die das Lagergut enthaltenden Paletten von einer Stirnseite her eingelagert werden, nach der hin sie dann auch zur Kommissionierung ausgelagert werden, aus den in das Regal eingelagerten Paletten und aus einer entlang dem Regal verfahrbaren, das jeweilige Regalfach anfahrenden Beschickungs- und Entnahmevorrichtung für die Paletten.

Eine solche Regalanlage ist beispielsweise beschrieben in der FR-A-1 214 242. Dort ist als Beschickungs- und Entnahmevorrichtung ein das Regal überfahrender Brückenkran vorgesehen, dessen Greifer sich überhebbar an einer an der längs des Regals verfahrbaren Kranbrücke quer zum Regal verfahrbaren abgehängten Führung führt. Diese Konstruktion erweist sich insbesondere für Langgut speichernde Regalanlagen als ungeeignet, da sich beim Ein- und Auslagern des Lagergutes aufgrund der am Greifer bzw. an seiner Führung auftretenden Kippmomente das mit dem Greifer anzufahrende und während des Ein- bzw. Auslagerungsvorgangs beizubehaltende Niveau nicht einhalten lässt, was im Ergebnis zu Betriebsstörungen führt. Entsprechende Betriebsstörungen treten bei einer Regalanlage auf, wie sie in der US-A-4 063 653 beschrieben ist. In diesem Fall wird die Beschickungs- und Entnahmevorrichtung von einer an einem auf dem Flur am Regal entlang verfahrbaren Portal überhebbaren Plattform mit einer darauf installierten Vorrichtung zum Ein- und Auslagern von Paletten gebildet. Bereits Unebenheiten des Flurs, auf dem das Portal verfährt, die erfahrungsgemäss auch im nachherein noch auftreten können, führen wieder zum Abweichen der Plattform von der unbedingt einzuhaltenden fluchtenden Zuordnung zum jeweils angefahrenen Regalfach.

Ausgehend vom im Vorausgehenden umrissenen Stand der Technik liegt der Erfindung die Aufgabe zugrunde, den angesprochenen Typ einer Regalanlage so auszugestalten, dass eine einwandfreie Zuordnung des Bestandteils der Beschickungs- und Entnahmevorrichtung bildenden, an der Palette anzusetzenden Greifers zum jeweiligen Regalfach sichergestellt ist und bleibt, die eine störungsfreie Beschickung bzw. Entnahme gewährleistet.

Die Aufgabe wird bei einer Lagereinrichtung des eingangs umrissenen Typs erfindungsgemäss dadurch gelöst, dass die Regalfächer von über die Breite und über die Tiefe des Regals im Abstand voneinander angeordneten Holmen und von an den Holmen im Abstand voneinander übereinander angeordneten, die eingelagerten Paletten unterfangenden Konsolen gebildet werden, dass die selbsttragenden, schubladenartig ein- und auslagerbaren Paletten an der Rückseite mit sich auf den Bestandteil des Regals bildenden Konsolen abstützenden Laufrollen und an der Frontseite mit einem Widerlager für eine mit ihm in Wirkeingriff kommenden Beschickungs- und Entnahmevorrichtung versehen sind, und dass die Beschickungs- und Entnahmevorrichtung ein entlang der Zugangs- bzw. Entnahmeseite des Regals über die Höhe des Regals und in Beschickungs- und Entnahmevorrichtung entsprechend verlagerbarer, mit dem frontseitigen Widerlager der jeweils zu handhabenden Palette in Wirkeingriff bringbarer Greifer ist, der an einer sich über Laufrollen auf dem Flur vor dem Regal abstützenden Stütze höhenverstellbar angeordnet ist, wobei die Stütze vom freien Ende eines Auslegers ausgeht, der sich in einem Bestandteil eines auf dem Regal entlang der Beschickungs- und Entnahmeseite des Regals zwangsgeführt verfahrbaren Wagens bildenden Führung in Beschickungs- und Entnahmerichtung verlagerbar führt.

Mit dem in seinen drei Bewegungseinrichtungen zwangsgeführten Greifer wird die jeweils in Materialentnahmeposition zu überführende Palette angefahren, die angefahrene Palette angehoben und zur Materialentnahme schubladenartig aus ihrem Regelfach herausgezogen. Die am Regal zwangsgeführte Beschickungs- und Entnahmevorrichtung stellt dabei die für eine störungsfreie Regalbedienung erforderliche lagerechte Orientierung des Greifers zum jeweiligen Regelfach sicher.

Die schubladenartig aus dem Regal in Materialentnahmeposition übergeführte Palette ist im einfachsten Fall über Leitern und dergleichen zugänglich. In Ausgestaltung der Regalanlagen ist dem entlang der Beschickungs- und Entnahmeseite des Regals verfahrbaren Wagen zusätzlich zur Greiferstütze im Abstand von der Greiferstütze eine weitere gleichsinnig verlagerbare Stütze zugeordnet, an der sich eine Arbeitsbühne höhenverstellbart führt, von der aus die in Materialentnahmeposition befindliche Palette zugänglich ist. Auf an der Arbeitsbühne vorgesehenen, zur Materialentnahmeseite hin auskragende Aufnahmen kann das aus der in Materialentnahmeposition befindlichen Palette entnommene Material abgelegt werden. Mit der Arbeitsbühne kann das entnommene Material dann auch zum Flur hin abgesenkt werden. Hierfür kann aber auch ein auf dem Regal verfahrbarer, vorzugsweise dem ohnehin bereits vorgesehenen, auf dem Regal verfahrbaren Wagen zugeordneter Auslegerdrehkran vorgesehen sein. Der Auslegerdrehkran kann dann auch in an sich bekannter Weise mit einer am Ausleger verfahrbaren Laufkatze versehen sein, an der die Winde zum Überheben des entnommenen Materials angeordnet ist. Der Kran bietet sich auch für die Einlagerung von Lagergut an. Die Zugänglichkeit der in Materialentnahme- und dann auch Materialbeschickungsposition befindlichen Palette für den Kran lässt sich dadurch verbessern, dass der vom auf dem Regal verfahrbaren Wagen ausgehende Träger an der Greiferstütze aussermittig, und zwar bei mit einer Arbeitsbühne ausgerüsteten Anlagen nach der von der Arbeitsbühne abgekehrten Seite hin versetzt, angreift. Hierfür bieten sich insbesondere als Portal ausgebildete Greiferstützen an, an denen der Träger in der Flucht einer Portalstütze angreift.

Portalstützen erweisen sich des weiteren für die Zwangsführung des Greifers an der Stütze als vorteilhaft. Der Greifer führt sich hierbei mit einem sich über Führungsrollen an den Portalstützen abzustützenden Führungsschlitten an der Stütze.

Beim Grundtyp der erfindungsgemäss ausgestalteten Anlage ist vorgesehen, dass die Palette, aus der Lagergut entnommen werden soll, nach Art einer Schublade nur so weit aus dem Regal herausgezogen wird, dass sich die an der Rückseite der Palette vorgesehenen Laufrollen noch auf den das Regalfach bildenden Regalkonsolen abstützen. Zweckmässigerweise ist in diesem Fall eine ein vollständiges Herausziehen der Palette aus dem Regal verhindernde, etwa die Laufrollen hinterfangende Sperre vorgesehen.

Für den Fall der Vorgabe, dass die Paletten zur Materialentnahme wie auch zur Einlagerung von Material aus dem Regal auch auf dem Flur überführbar sein müssen, wird in weiterer Ausgestaltung der Erfindung der Greiferstütze auf der dem Regal zugekehrten Seite eine spurgebundene, synchron mit der Greiferstütze am Regal entlang verfahrbare Hilfsstütze vorgelagert, an der sich eine synchron mit dem Greifer heb- und senkbare, die ausgelagerte Palette unterfangende Konsole führt. Die Hilfsstütze, das heisst die Bestandteile der Hilfsstütze bildende Konsole, unterfängt das hintere Ende der vollständig aus dem Regal herausgezogenen Palette. Die nunmehr an der Frontseite vom Greifer und an der Rückseite der Bestandteil der Hilfsstütze bildenden Konsole unterfangene Palette wird unter synchronem Absenken von Greifer und Konsole auf dem Flur überführt und sinngemäss dann auch wieder zur Einlagerung überhoben.

Da die einen Bestandteil der Hilfsstütze bildende Konsole in Eingriffsposition beim Verfahren des Greifers in Beschickungs- bzw. Entnahmerichtung im Fahrweg des Greifers liegt, muss dafür Sorge getragen werden, dass diese Greiferbewegung durch die Konsole nicht behindert wird. Das lässt sich dadurch lösen, dass die Konsole um eine vertikale Achse verschwenkbar an der Hilfsstütze angeordnet wird und erst in Eingriffsposition verschwenkt wird, wenn der Greifer den Bereich der Hilfsstütze überfahren hat, oder aber dadurch, dass die Konsole erst auf das Niveau der Eingriffsposition überhoben wird, wenn der Greifer den Bereich der Hilfsstütze durchfahren hat.

Auch für die Hilfsstütze bietet sich eine Portalkonstruktion an, wobei das Portal so breit ausgelegt ist, dass es vom Greifer und dann natürlich auch von der Palette durchfahrbar ist.

In weiterer Ausgestaltung der Erfindung wird vorgeschlagen, den dem auf dem Regal verfahrbaren Wagen zugeordneten, in Beschickungs- und Entnahmevorrichtung gegenüber dem Wagen verlagerbaren Ausleger auf dem Wagen pendelnd und begrenzt heb-, senk- und kippbar anzuordnen. Nach einer speziellen Ausführungsform ist hierfür die Führung, in der der Ausleger in Beschickungs- und Entnahmerichtung verlagerbar ist, in auf dem Wagen angeordneten Lagerböcken mit einer Pendelachse in sich in der Vertikalen erstreckenden Langlöchern zweckmässigerweise unverdrehbar gelagert.

In der Zeichnung ist die Erfindung anhand von Ausführungsbeispielen weitergehend erläutert. Es zeigen:

Fig. 1 eine erste Ausführungsform der neuen Wabenregalanlage in Seitenansicht (Ansicht in Richtung des Pfeiles I in Fig. 2);

Fig. 2 die Wabenregelanlage in Fig. 1 in Frontansicht (Ansicht in Richtung des Pfeiles II in Fig. 1), die Greiferstütze geschnitten;

Fig. 3 die Wabenregalanlage in den Fig. 1 und 2 in Draufsicht;

Fig. 4 eine weitere Ausführungsform der neuen, eine Hilfsstütze verwendenden Wabenregelanlage in Seitenansicht;

Fig. 5 die Wabenregalanlage in Fig. 4 in Draufsicht;

Fig. 6 eine Ausführungsform des auf dem Regal entlang der Frontseite des Regals verfahrbaren Wagens, von dem die sich über Stützen auf dem Flur abstützenden Ausleger ausgehen, im Längsschnitt, abgebrochen.

Die dargestellten Wabenregale bestehen aus einer Vielzahl von neben- und übereinander angeordneten Regalfächern 11, 11′, 11″..., in die Lagergut 13, 13′... enthaltende Paletten 12 von der Frontseite 111 der Regale her eingelagert werden (Pfeil A′), nach der hin die Paletten 12 dann auch wieder zur Entnahme von Lagergut 13, 13′... für die Zusammenstellung von abgerufenen Kommissionen schubladenartig herausgezogen werden (Pfeil A).

Mit der vorliegenden Erfindung wird die Handhabung der Paletten 12, das heisst insbesondere die Auslagerung der Paletten 12 aus dem Regal zur Entnahme von in den Paletten 12 enthaltenem Lagergut 13, 13′... für die Zusammenstellung abgerufener Materialkommissionen, angesprochen. Nach der Erfindung ist ein an dem Regal entlang (Doppelpfeil B) über die Höhe des Regals (Doppelpfeil C) sowie in Beschickungs- und Entnahmerichtung (Doppelpfeil A/A′) verfahrbarer, gegenüber dem Regal zwangsgeführter Greifer 21 vorgesehen, der mit den Paletten 12 in Eingriff bringbar ist, sei es, dass er die Bodenseite der Palette 12 unterfängt und in einen Rücksprung an der Bodenseite der Palette 12 eingreift, sei es, dass er ein Widerlager an der Frontseite der Palette 12 unter- und hintergreift, und mit dem die Palette 12 nach Art einer Schublade aus dem Regal herausgezogen bzw. vollständig aus dem Regal entnommen wird (Pfeil A) und dann auch wieder in das Regal, das heisst in das für sie vorgesehene Fach, geschoben wird (Pfeil A′).

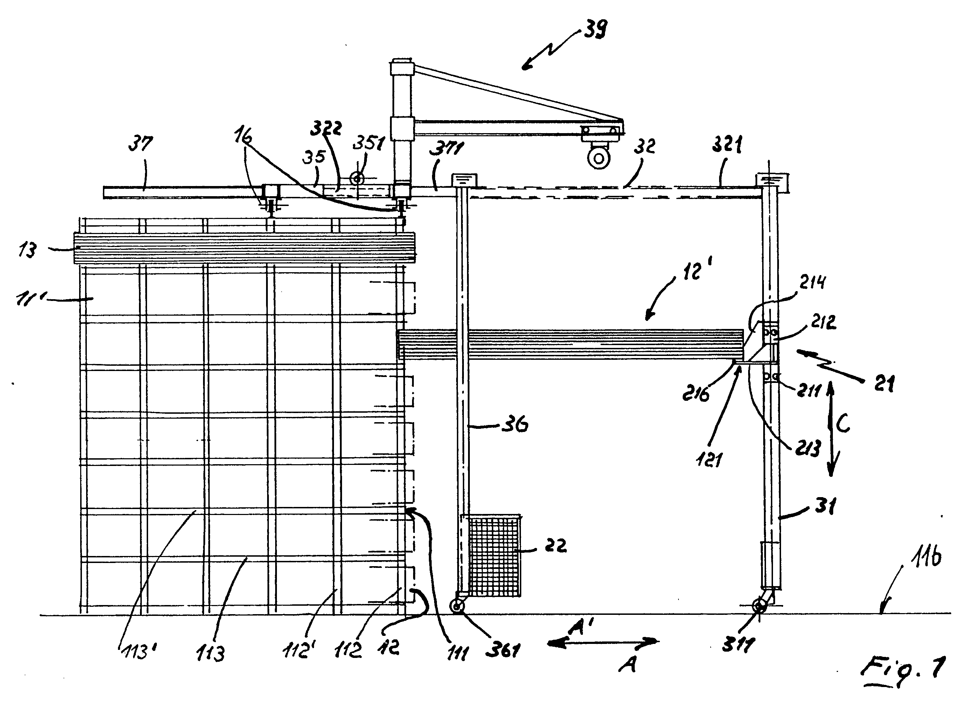

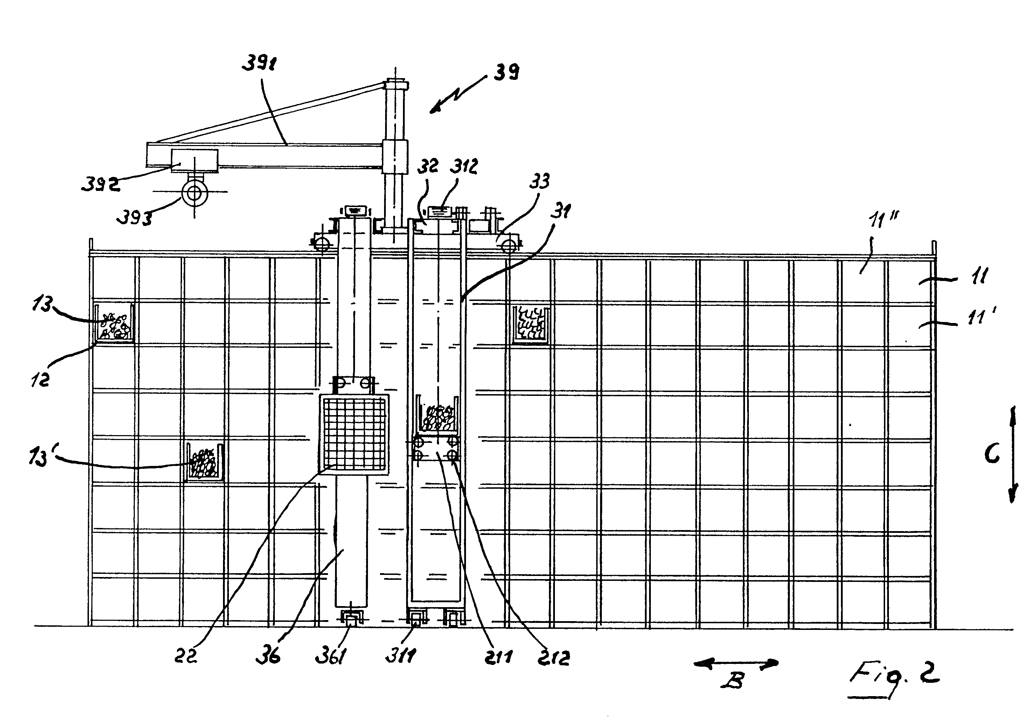

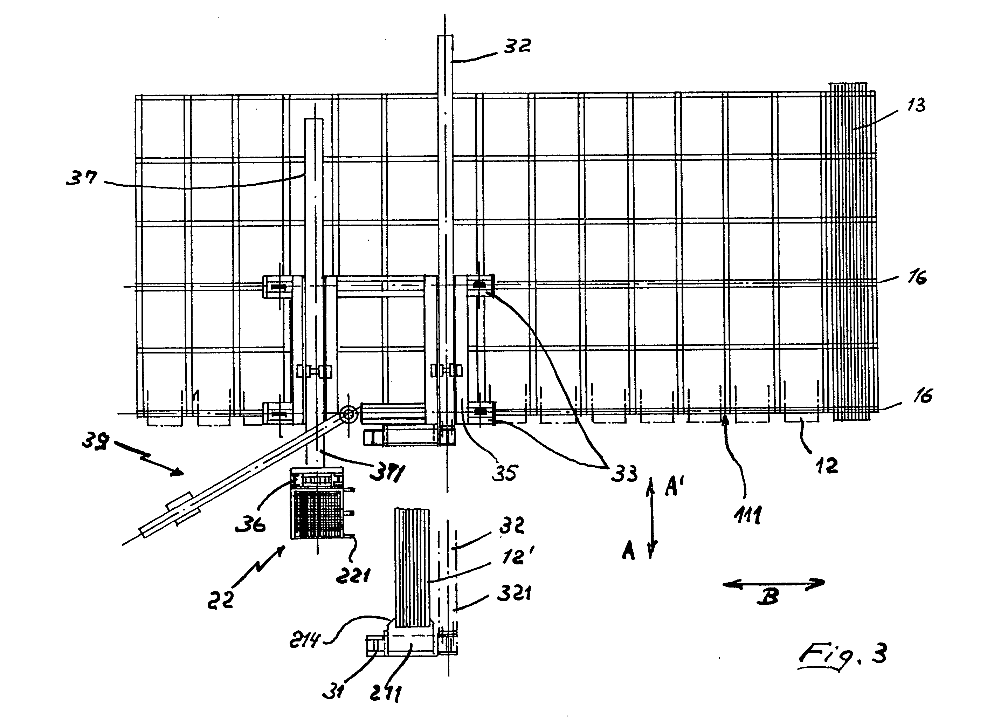

Nach den Fig. 1 bis 3 ist der Greifer 21 an einer auf dem Lagerflur 116 längs (Doppelpfeil B) und quer (Doppelpfeil A/A′) zum Regal verfahrbaren Stütze 31 an der Stütze 31 in der Höhe verfahrbar (Doppelpfeil C) angeordnet, wobei die Stütze 31 das freie Ende 321 eines Auslegers 32 unterfängt, der seinerseits in einem auf dem Regal entlang der Frontseite des Regals spurgebunden (16, 16) verfahrbaren (Doppelpfeil B) Wagen 33 im Sinne des Doppelpfeils A/A' verlagerbar bzw. verschiebbar gelagert ist. Die flurseitig mit als Schwenkrollen ausgebildeten Laufrollen 311 versehene Stütze 31 ist als Portal ausgelegt, in dem sich der Greifer 21 mit einem mit Führungsrollen 212 bestückten Schlitten 211 führt. Überhoben wird der Greifer 21 mit einer über Kopf der Stütze 31 angeordneten Winde 312. Zur Verlagerung des Auslegers 32 gegenüber dem Wagen 33 bzw. gegenüber dem Regal ist ein Zahnstangentrieb 322/351 vorgesehen. Der eigentliche Greifer wird gebildet von einer vom Führungsschlitten 211 ausgehenden, mit die Palette 12 einfassenden Wangen 214 versehenen Konsole 213 mit einem an ihrem freien Ende nach oben vorspringenden Nocken 216.

Zur Materialentnahme aus im Regal in Paletten 12 eingelagertem Lagergut 13, 13'... werden die jeweiligen Regalfächer 11, 11'... mit dem Greifer 21 bei gegen das Regal unter Belassung eines Freiraumes verfahrener Stütze 31 durch Verfahren des Regalförderzeuges 31/32/33 entlang dem Regal in die Flucht des in Frage kommenden Regalfaches und Überheben des Greifers 21 auf das Niveau des Freiraums unterhalb des Regalfaches angefahren. Sodann wird die Greiferstütze 31 weiter gegen das Regal verfahren, bis die einen Bestandteil des Greifers 21 bildende Konsole 213 sich in das Regal erstreckt und insbesondere der Greifernocken 216 einen bodenseitigen Rücksprung an der in Materialentnahmeposition zu überführenden Palette 12 angefahren hat. Danach wird der Greifer 21 soweit angehoben, dass die Palette 12 von der Greiferkonsole 213 geringfügig angehoben wird, wobei der Greifernocken 216 dann auch mit dem Palettenrücksprung 112 in Wirkeingriff kommt. Anschliessend wird die Palette 12 schubladenartig aus dem Regal herausgezogen und so in Materialentnahmeposition überführt (Fig. 1).

Nach den Fig. 1 bis 3 ist zur Materialentnahme aus der in Materialentnahmeposition befindlichen Palette 12' eine Arbeitsbühne 22 vorgesehen, die an einer sich über eine Laufrolle 361 auf dem Flur 116 abstützenden Stütze 36 überhebbar angeordnet ist, wobei die Stütze 36 wiederum vom freien Ende 371 eines weiteren, dem auf dem Regal verfahrbaren Wagen 33 zugeordneten, ebenfalls im Sinne des Doppelpfeiles A/A' verlagerbaren Auslegers 37 ausgeht. Mit dieser Arbeitsbühne 22 kann die in Entnahmeposition befindliche Palette 12' individuell angefahren werden, so dass von der Arbeitsbühne 22 her abgerufenes Material aus der Palette 12' entnommen und etwa auf an der Arbeitsbühne 22 vorgesehenen Konsole 221 abgelegt werden kann. Das aus der Palette 12' entnommene Material kann sodann mit der Arbeitsbühne 22 zum Flur 116 hin abgesenkt und dort abtransportiert werden. Für das Überheben des aus der Palette 12 entnommenen Materials auf den Flur 116 steht des weiteren ein noch auf dem Wagen 33 installierter Auslegerdrehkran 39 mit entlang dem Kranausleger 391 verfahrbarer Katze 392 und ihr zugeordneter Winde 393 zur Verfügung. Dieser Auslegerdrehkran 39 ist dann auch für die Einlagerung von Material in die Paletten 12 vorgesehen. Zur Zugänglichkeit der ausgefahrenen Palette 12' für den Auslegerdrehkran 39 trägt bei, wenn der Ausleger 33 an der Greiferstütze 31 – wie dargestellt – aussermittig angreift.

Die Überführung der nicht mehr benötigten Palette 12' aus der Entnahmeposition zurück in das Regal erfolgt durch Verlagerung des Auslegers 32 im Sinne des Pfeiles A' und damit einhergehendem Verfahren der Greiferstütze 31 gegen das Regal. Durch begrenztes Absenken des Greifers 21 kommt der Greifer 21 und damit dann auch das Regalförderzeug 31/32/33 abschliessend ausser Eingriff der wieder eingelagerten Palette 12. Das Regalförderzeug 31/32/33 steht danach wieder zum Anfahren einer anderen, in Materialentnahmeposition zu überführenden Palette 12 zur Verfügung.

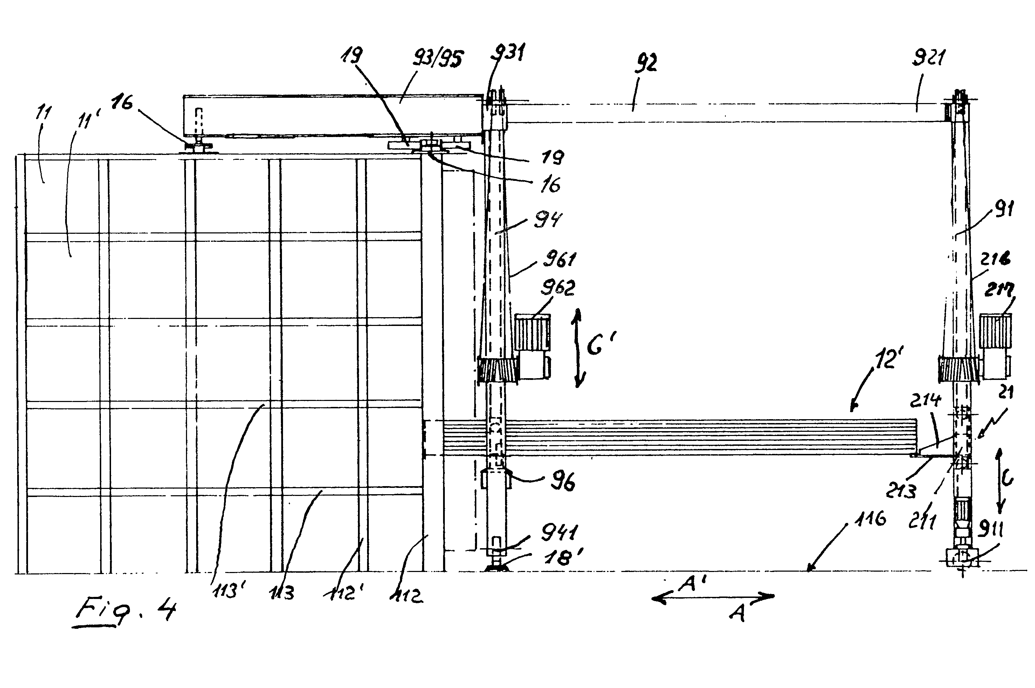

Die Fig. 4 und 5 geben eine spezielle Ausführungsform der neuen Wabenregalanlage wieder. Hierbei ist ebenso wie bei der Ausführungsform nach den Fig. 1 bis 3 auf dem Regal ein entlang der Frontseite des Regals im Sinne des Doppelpfeiles B verfahrbarer, spurgebundener (16, 16) Wagen 93 mit einer zusätzlichen Zwangsführung 19, 19 vorgesehen, in dem ein Ausleger 92 im Sinne des Doppelpfeiles A/A' verschiebbar gelagert ist. Am freien Ende 921 des Auslegers 92 ist die Greiferstütze 91 angeordnet, die sich über Schwenkrollen 911 auf dem Flur 116 abstützt. Ausserdem ist an einem frontseitig über das Regal auskragenden Überstand 931 des Wagens 93 die Hilfsstütze 94 angeordnet, die schienengebunden (18'/941) am Regal entlang verfahrbar ist. Hierbei ist auch die Hilfsstütze als ein vom an der Greiferstütze 91 befindlichen Greifer 21 durchfahrbares Portal ausgebildet, in dem sich eine, die vollständig aus dem Regal entnommene Palette 12' unterfangende Brücke 96 befindet. Die nacheilend das Niveau der Greiferkonsole 213 einnehmende und voreilend aus diesem Niveau absenkbare Brücke 96 ist in diesem Fall ebenso wie der Greifer 21 über Seilzüge 961 bzw. 216 in Verbindung mit Elektrowinden 962 bzw. 217 gleichsinnig mit dem Greifer 21 überhebbar. Der Ausleger 92 ist wie bei der Ausführungsform nach den Fig. 1 bis 3 mittels eines Zahnstangentriebes verlagerbar.

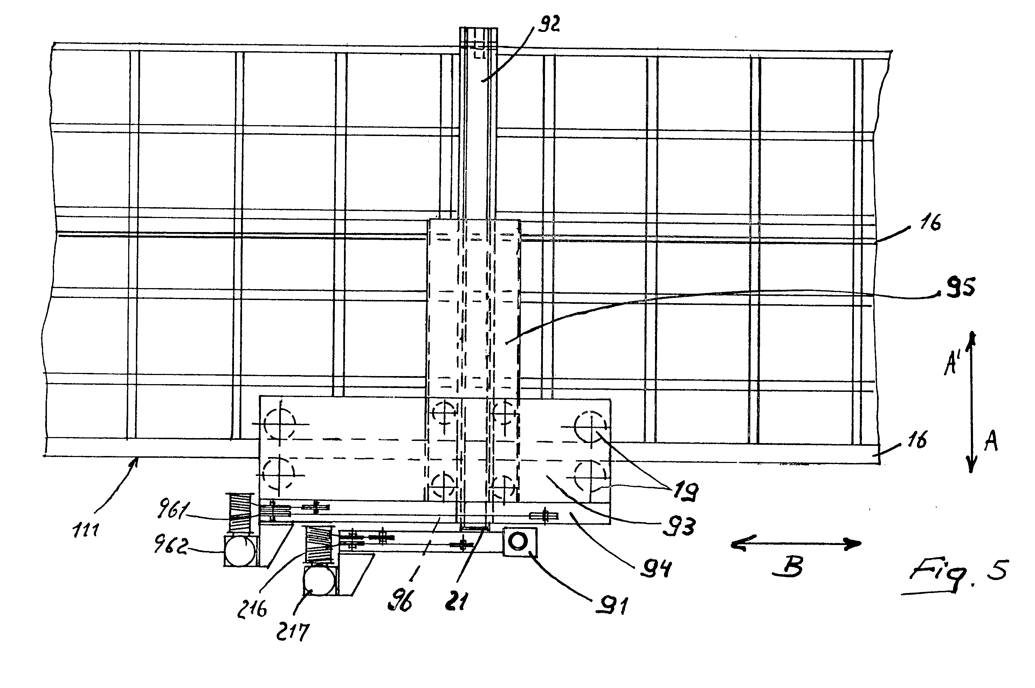

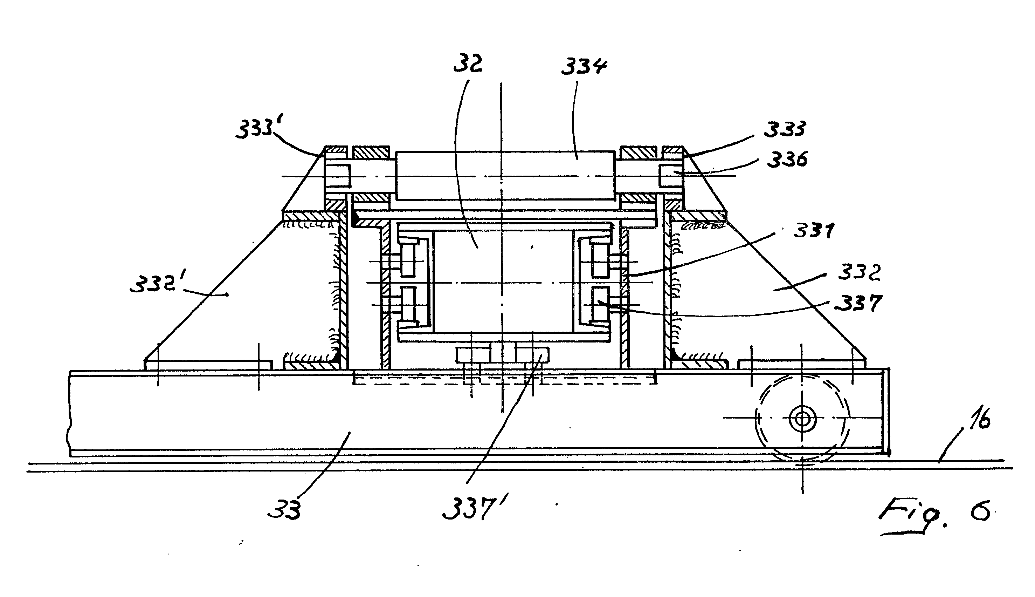

Um bei Ausgestaltungen der neuen Wabenregalanlage, die einen auf dem Regal verfahrbaren Wagen mit dem Wagen verschieblich zugeordnetem Ausleger und einer vom freien Ende des Auslegers ausgehenden, sich über eine Laufrolle auf dem Flur abstützende Greiferstütze verwenden (Fig. 1 bis 5), müssen Unebenheiten des Flurs einkalkuliert werden. Dazu wurde eine besondere Lagerung für den Ausleger im spurgebunden auf dem Regal verfahrbaren Wagen entwickelt, die in Fig. 6 wiedergegeben ist. In auf dem Wagen 33 (Fig. 1 bis 3) angeordneten Lagerböcken 332, 332', ist in sich in der Vertikalen erstreckenden Langlöchern 333, 333' eine mit Schlüsselflächen 336 versehene Achse 334 heb- und kipp-, jedoch unverdrehbar gelagert, an der die Führung 331 für den Ausleger 32 pendelnd aufgehängt ist. Geführt wird der Ausleger 32 in der Führung 331 durch Bestandteil der Führung 331 bildende Rollen 337, 337', die sich gegen auskragende Flansche bzw. einen nach unten vorspringenden Steg des Auslegers 32 abstützen. Diese Lagerung des Auslegers 32 auf dem Wagen 33 vermittelt dem Ausleger 33 und damit dann auch dem gesamten Regalförderzeug 31/32/33 eine hinreichende Beweglichkeit, die eine Beeinträchtigung der Funktionsfähigkeit des Regalförderzeuges 31/32/33 durch Unebenheiten des Flurs 116 ausschliesst. Der Wagen 93 in Fig. 8 und 9 bzw. die Lagerung des Auslegers 92 auf dem Wagen 93 ist sinngemäss ausgestaltet.

Die bei der neuen Wabenregalanlage zum Einsatz kommenden Paletten 12 sind an der Rückseite mit Laufrollen bestückt, über die sie sich auf den die Regalfächer bildenden Konsolen an den Regalholmen abstützen.

Für das Verfahren der beschriebenen, auf dem Regal verfahrbaren Wagen wie auch für das Flurförderzeug stehen bekannte Antriebe zur Verfügung. Für das Überheben des Greifers an der Greiferstütze wie auch für das Überheben der Konsole an der Hilfsstütze sowie für die Verlagerung des Auslegers gegenüber dem auf dem Regal verfahrbaren Wagen stehen selbstverständlich auch andere als die in der Zeichnungsbeschreibung beschriebenen Mittel zur Verfügung.

**Patentansprüche**

1. Wabenregalanlage, bestehend aus mindestens einem, aus einer Vielzahl von über- und nebeneinander angeordneten, auf den Querschnitt der in sie einzulagernden Paletten ausgelegten Fächern (11, 11', 11"...) gebildeten Regal, in das die das Lagergut (13, 13'...) enthaltenden Paletten (12) von einer Stirnseite her eingelagert werden, nach der hin sie dann auch zur Kommissionierung ausgelagert werden, aus den in das Regal eingelagerten Paletten (12) und aus einer entlang dem Regal verfahrbaren, das jeweilige Regalfach (z.B. 11) anfahrenden Beschickungs- und Entnahmevorrichtung für die Paletten (12), dadurch gekennzeichnet, dass die Regalfächer von über die Breite und über die Tiefe des Regals im Abstand voneinander angeordneten Holmen (112, 112'...) und von an den Holmen (112, 112'...) im Abstand voneinander übereinander angeordneten, die eingelagerten Paletten (12) unterfangenden Konsolen (113, 113'...) gebildet werden, dass die selbsttragenden, schubladenartig ein- und auslagerbaren Paletten (12) an der Rückseite mit sich auf den Bestandteil des Regals bildenden Konsolen (113, 113'...) abstützenden Laufrollen und an der Frontseite mit einem Widerlager für eine mit ihm in Wirkeingriff kommende Beschickungs- und Entnahmevorrichtung versehen sind, und dass die Beschickungs- und Entnahmevorrichtung ein entlang der Zugangs- bzw. Entnahmeseite (111) des Regals, über die Höhe des Regals sowie in Beschickungs- und Entnahmerichtung verlagerbarer, mit dem frontseitigen Widerlager der jeweils zu handhabenden Palette (12) in Wirkeingriff bringbarer Greifer (21) ist, der an einer sich über Laufrollen (311 bzw. 911) auf dem Flur (116) vor dem Regal abstützenden Stütze (31 bzw. 91) höhenverstellbar angeordnet ist, wobei die Stütze (31 bzw. 91) vom freien Ende (321 bzw. 921) eines Auslegers (32 bzw. 92) ausgeht, der sich in einer Bestandteil eines auf dem Regal entlang der Beschickungs- und Entnahmeseite des Regals zwangsgeführt verfahrbaren Wagens (33 bzw. 93) bildenden Führung (35 bzw. 95) in Beschickungs- und Entnahmerichtung verlagerbar führt.

2. Regalanlage nach Anspruch 1, dadurch gekennzeichnet, dass die Greiferstütze (31 bzw. 91) als Portal ausgebildet ist, in dem sich der Greifer (21) führt und an dem der vom Wagen (33 bzw. 93) ausgehende Ausleger (32 bzw. 92) in der Flucht einer Portalstütze angreift.

3. Regalanlage nach einem der Ansprüche 1 und 2, dadurch gekennzeichnet, dass der Greiferstütze (9) auf der dem Regal zugekehrten Seite eine spurgebundene, synchron mit der Greiferstütze (91) an dem Regal entlang verfahrbare Hilfsstütze (94) vorgelagert ist, an der sich eine synchron mit dem Greifer (21) heb- und senkbare, die ausgelagerte Palette (211') unterfangende Konsole (96) führt.

4. Regalanlage nach Anspruch 3, gekennzeichnet durch eine Zwangsführung (931) der Hilfsstütze (94) am Regal.

5. Regalanlage nach einem der Ansprüche 3 und 4, dadurch gekennzeichnet, dass die Hilfsstütze (94) als vom Greifer durchfahrbares Portal ausgebildet ist, in dem sich die Konsole (96) nacheilend zum Greifer (21) das jeweilige Regalfach von unten anfahrend führt.

6. Anlage nach einem der Ansprüche 1 bis 5, dadurch gekennzeichnet, dass der dem auf dem Regal verfahrbaren Wagen (33 bzw. 93) zugeordnete, in Beschickungs- und Entnahmerichtung gegenüber dem Wagen (33, 93) verlagerbare Ausleger (32, 92) auf dem Wagen (33, 93) pendelnd und begrenzt heb-, senk- und kippbar geführt ist.

7. Anlage nach Anspruch 6, dadurch gekennzeichnet, dass die Führung (331), in der der Ausleger (32) verlagerbar ist, in auf dem Wagen (33) angeordneten Lagerböcken (332, 332') mit einer Pendelachse (334) in sich in der Vertikalen erstreckenden Langlöchern (333, 333') gelagert ist (Fig. 6).

8. Anlage nach Anspruch 7, dadurch gekennzeichnet, dass die Achse (334) sich mit Schlüsselflächen (336) unverdrehbar in den Langlöchern (333, 333') führt (Fig. 6).

9. Anlage nach einem der Ansprüche 6 bis 8, dadurch gekennzeichnet, dass der Ausleger (32) am Boden und über Kopf mit auskragenden Flanschen sowie bodenseitig in der Flucht der Längsmittelachse mit einem vorspringenden Steg versehen ist und an der Führung (331) gegen die Flansche und beidseitig gegen den Steg zur Anlage kommende Führungsrollen (337, 337') vorgesehen sind (Fig. 6).

## Claims

1. Installation of honeycomb shelvings, including at least one shelf formed by a plurality of compartements (11, 11', 11"...) which are disposed above and beside one another and are distributed over the cross-section of the pallets to be inserted therein; the pallets (12) which contain the stored goods (13, 13'...) are inserted into the shelf from one end and are then also displaced towards said end as required; said installation also including the pallets (12) which are inserted into the shelf and a loading and pick-up device for the pallets (12), said device being movable along the shelf and encountering the respective shelf compartments, (e.g. 11), characterised in that the shelf compartments are formed by struts (112, 112'...) which are spaced from one another and are disposed over the width and depth of the shelf – and by brackets (113, 113'...) which are spaced above one other on the struts (112, 112') and support the inserted pallets (12); the self-supporting pallets (12), which are insertable and extractable like a drawer, are provided on their rear surfaces with rollers, which are supported on the brackets (113, 113'...) forming a component part of the shelf, and on their front surfaces with a stop for a loading and pick-up device which comes into active engagement with said stop; and the loading and pick-up device is a grab member (21) which is displaceable along the supply and/or pick-up side (111) of the shelf, over the height of the shelf and in the loading and pick-up direction and being capable of being brought into active engagement with the front stop of the actual pallet (12) to be manipulated, which grab member (21) is disposed in height-adjustable manner on a support (31 or 91) which is supported on the floor (116) in front of the shelf by means of rollers (311 or 911), whereby the support (31 or 91) extends from the free end (321 or 921) of a jib (32 or 92) which is guided in a guide means (35 or 95) – forming a component part of a truck (33 or 93) which is movable in a forcibly guided manner on the shelf along the loading and pick-up side of the shelf – so as to be displaceable in the loading and pick-up direction.

2. Shelf installation according to claim 1, characterised in that the grab support (31 or 91) is in the form of a gantry in which the grab member (21) is guided and with which the jib (32 or 92) – extending from the truck (33 or 93) – engages in alignment with a gantry support.

3. Shelf installation according to one of claims 1 and 2, characterised in that a track-bound auxiliary support (94), which is movable along the shelf in synchronism with the grab support (91), is mounted in front of the grab support (91) on the side facing the shelf, and a bracket (96) is guided on said auxiliary support (94), said bracket (96) being raisable and lowerable in synchronism with the grab member (21) and supporting the displaced pallet (211').

4. Shelf installation according to claim 3, characterised by a compulsory guide means (931) for guiding the auxiliary support (94) on the shelf.

5. Shelf installation according to one of claims 3 and 4, characterised in that the auxiliary support (94) is in the form of a gantry which is traversable by the grab member and in which the bracket (96) is guided in lagging manner relative to the grab member (21) so as to encounter the actual shelf compartment from below.

6. Installation according to one of claims 1 to 5, characterised in that the jib (32, 92), which is associated with the truck (33 or 93) – movable on the shelf – and is displaceable relative to the truck (33, 93) in the loading and pick-up direction, is guided on the truck (33, 93) in a pivotal manner and, to a limited extent, in a raisable, lowerable and tiltable manner.

7. Installation according to claim 6, characterised in that the guide means (331), in which the jib (32) is displaceable, is mounted in bearing blocks (332, 332') – which are disposed on the truck (33) and have an oscillating axle (334) – in vertically extending slots (333, 333') (Fig. 6).

8. Installation according to claim 7, characterised in that the axle (334) is guided by key faces (336) non-rotatably in the slots (333, 333') (Fig. 6).

9. Installation according to one of claims 6 to 8, characterised in that the jib (32) is provided with protruding flanges at the base and overhead and is provided with a protruding web at the base in alignment with the longitudinal central axis, and guide rollers (337, 337') are provided on the guide means (331), said rollers (337, 337') abutting the flanges and, at either end, the web (Fig. 6).

## Revendications

1. Installation de rayonnage en nid d'abeilles, constituée par au moins un rayonnage formé par une multiplicité de compartiments (11, 11', 11"...) disposés l'un au dessus de l'autre et l'un à côté de l'autre, calculés sur la section transversale de palettes qu'ils auront à recevoir, rayonnage dans lequel les palettes (12) contenant le matériel à stocker (13, 13'...) sont introduites par un côté par lequel elles sont également retirées pour préparer les commandes, par les palettes (12) à stocker dans le rayonnage, et par un dispositif de chargement et de déchargement pour les palettes (12) pouvant être déplacé de long du rayonnage et amené contre le compartiment concerné (par exemple 11), caractérisée en ce que les compartiments de rayonnage sont formés par des montants (112, 112'...) disposés à distance l'un de l'autre sur la largeur et la profondeur du rayon, et par des consoles (113, 113'...) disposées l'une au dessus de l'autre sur les montants (112, 112'...) et à distance l'une de l'autre, et passant sous les palettes (12) stockées en ce que les palettes (12) autoporteuses pouvant rentrer et sortir comme des tiroirs sont munies sur le côté postérieur de galets de roulement s'appuyant sur les consoles (113, 113'...) faisant partie du rayonnage, et sur le côté frontal d'une butée pour un dispositif de chargement et de déchargement venant en prise avec lui, et en ce que le dispositif de chargement et de déchargement est en préhenseur (21) pouvant être déplacé le long du côté d'accès ou de déchargement (111) du rayonnage, sur la hauteur de celui-ci ainsi que dans le sens du chargement et du déchargement, et pouvant être amené en prise avec la butée côté frontal de la palette (12) à manœuvrer, lequel préhenseur est disposé de façon à pouvoir être réglé en hauteur sur un support (31 ou 91) s'appuyant par l'intermédiaire de galets de roulement (311 et 911) sur le sol (116) devant le rayonnage, le support (31 ou 91) partant de l'extrémité libre (321 ou 921) d'un bras (32 ou 92), qui est guidé de façon à pouvoir être déplacé dans le sens du chargement et du déchargement dans un guidage (35 ou 95) faisant partie d'un chariot (33 ou 93) pouvant se déplacer par guidage forcé le long du côté de chargement et de déchargement du rayonnage.

2. Installation de rayonnage selon la revendication 1, caractérisé en ce que le support (31 ou 91) du préhenseur est réalisé sous forme de portique dans lequel se déplace le préhenseur (21) et sur lequel agit le bras (32 ou 92) partant du chariot (33 ou 93) dans l'alignement d'un support de portique.

3. Installation de rayonnage selon l'une des revendications 1 et 2, caractérisée en ce qu'on monte avant le support de préhenseur (91), sur le côté tourné vers le rayonnage un support auxiliaire (94) filoguidé, pouvant se déplacer en synchronisme avec le support de préhenseur (91) le long du rayonnage, support auxiliaire sur lequel est guidée une console (96) qui peut monter et descendre en synchronisme avec le préhenseur (21) et qui passe sous la palette stockée (211').

4. Installation de rayonnage selon la revendication 3, caractérisé par un guidage forcé (931) du support auxiliaire (94) sur le rayonnage.

5. Installation de rayonnage selon l'une des revendications 3 et 4, caractérisée en ce que le support auxiliaire (94) est réalisé sous forme d'un portique qui peut être traversé par le préhenseur et dans lequel se déplace la console avec un retard sur le préhenseur (21) et aborde le compartiment du rayonnage concerné par en dessous.

6. Installation de rayonnage selon l'une des revendications 1 à 5, caractérisé en ce que le bras (32, 92) associé au chariot (33, 93) déplaçable sur le rayonnage et pouvant être déplacé par rapport au chariot (33, 93) dans le sens du chargement et du déchargement, est guidé sur le chariot de façon à penduler et à pouvoir monter, descendre et basculer de façon limitée.

7. Installation selon la revendication 6, caractérisée en ce que le guidage (331) dans lequel le bras (32) peut se déplacer, est monté dans des paliers (332, 332') disposés sur le chariot (33) et l'axe d'oscillation pendulaire (334) est monté dans des trous oblongs (333, 333') s'étendant dans le sens vertical (fig. 6).

8. Installation selon la revendication 7, caractérisée en ce que l'axe (334) est guidé dans les trous oblongs (333, 333') de façon à ne pouvoir tourner par des surfaces de verrouillage (336).

9. Installation selon l'une des revendications 6 à 8, caractérisée en ce que le bras (32) est muni en haut et en bas de rebords en porte-à-faux ainsi que, en bas de rebords en porte-à-faux ainsi que, en bas, d'une nervure saillant dans l'alignement de l'axe longitudinal médian et qu'on prévoit sur le guidage (331) des galets de guidage (337, 337') qui viennent s'appliquer contre ces rebords et de part et d'autre contre la nervure (fig. 6).

Fig. 1

Fig. 2

Fig. 3

Fig. 4

Fig. 5

Fig. 6

32  334  333'  333  336  332'  331  332  337  33  337'  16